# EUROPÄISCHE PATENTANMELDUNG

(11) **EP 0 896 952 A1**
(43) Veröffentlichungstag der Anmeldung: **17.02.1999**
(21) Anmeldenummer: 98114358.9
(22) Anmeldetag: 30.07.1998
(51) Int. Cl.: C01B 33/035, B01J 8/42, B01J 19/12

(54) **Verfahren zur Herstellung von hochreinem Siliciumgranulat**

(30) Priorität: 14.08.1997 DE 19735378
(71) Anmelder: Wacker-Chemie GmbH, 81737 München (DE)
(72) Erfinder: Schreieder, Franz, 84367 Tann (DE); Kim, Hee Young, Dr., Yusung-Gu, Taejon, 305-333 (KR)
(74) Vertreter: Rimböck, Karl-Heinz, Dr.

(57) **Zusammenfassung**

Gegenstand der Erfindung ist ein Verfahren zur Herstellung von Siliciumgranulat mit einer Chlorkontamination unter 50 Gewichts-ppm durch Abscheidung von elementarem Silicium auf Siliciumpartikeln in einem Fließbettreakor mit einer Heizzone und einer Reaktionszone, wobei die Siliciumpartikel in der Heizzone mittels eines inerten, siliciumfreien Trägergases zu einem Fließbett fluidisiert und mittels Mikrowellenenergie erhitzt, und in der Reaktionszone einem Reaktionsgas, bestehend aus einem Siliciumquellengas und dem Trägergas, ausgesetzt werden, dadurch gekennzeichnet, daß die durchschnittliche Temperatur des Reaktionsgases in der Reaktionszone, während es die fluidisierten Siliciumpartikel durchströmt, unter 900 °C liegt und die durchschnittliche Temperatur der fluidisierten Siliciumpartikel in der Reaktionszone, während sie von dem Reaktionsgas durchströmt werden, über 900 °C liegt.

## Beschreibung

Die Erfindung betrifft ein Verfahren zur Herstellung von hochreinem polykristallinen Silicium in einem Fließbettreaktor durch thermische Zersetzung oder Wasserstoffreduktion eines Siliciumquellengases.

Hochreines polykristallines Silicium (Polysilicium) als Ausgangsmaterial für die Herstellung von elektronischen Bauteilen und Solarzellen, gewinnt man durch thermische Zersetzung oder Wasserstoffreduktion eines Siliciumquellengases. Dieser Prozeß ist dem Fachmann unter dem Begriff "chemical vapor deposition, CVD" (chemische Dampfabscheidung) bekannt. Weltweit wird Polysilicium hauptsächlich in sog. Siemens-Reaktoren produziert. Die chemische Dampfabscheidung von elementarem Silicium in diesen CVD-Reaktoren erfolgt an Siliciumstangen sog. Dünnstäben, die unter einer Metallglocke mittels elektrischem Strom auf über 1000 °C erhitzt werden, und dann einem Gasgemisch, bestehend aus Wasserstoff und einem Siliciumquellengas, beispielsweise Trichlorsilan ausgesetzt werden. Sobald die Dünnstäbe auf einen bestimmten Durchmesser angewachsen sind, muß der Prozeßablauf unterbrochen werden d.h. es kann nur chargenweise nicht aber kontinuierlich gearbeitet werden.

In jüngster Zeit wurden Versuche unternommen, hochreines polykristallines Silicium als Granulat, nachfolgend als "Siliciumgranulat" bezeichnet, in Fließbettreaktoren während eines kontinuierlichen CVD-Prozesses zu erhalten. Fließbettreaktoren sind immer dann von Vorteil, wenn feste Oberflächen in hohem Maß einer gas- oder dampfförmigen Verbindung ausgesetzt werden sollen, um so eine wirtschaftliche Betriebsweise zu gewährleisten. Wenn ein Gasgemisch aus einem Siliciumquellengas beispielsweise Trichlorsilan und einem siliciumfreien Trägergas beispielsweise Wasserstoff nachfolgend als "Reaktionsgas" bezeichnet ein Fließbett aus Polysiliciumpartikeln, nachfolgend als "Siliciumpartikel" bezeichnet, durchströmt, wird elementares Silicium auf deren Oberfläche abgeschieden, wodurch diese Partikel in ihrer Größe zu granularem Polysilicium nachfolgend als "Siliciumgranulat" bezeichnet, anwachsen.

Um die für den CVD-Prozeß nötigen thermischen Verhältnisse zu schaffen, wird der Fließbettreaktor gewöhnlich mittels einer Trenneinrichtung in zwei Zonen geteilt (vgl. DE-43 27 308 C2):
1) eine Reaktionszone, in der sich das Siliciumquellengas bei einer bestimmten Reaktionstemperatur auf den Siliciumpartikeln als Polysilicium abscheidet, und
2) einer Heizzone, in der eine Fraktion der Siliciumpartikel mittels eines inerten, siliciumfreien Trägergases fluidisiert und beispielsweise mittels Mikrowellenenergie über die Reaktionstemperatur erhitzt wird.

Neben der wirtschaftlichen Betriebsweise von Fließbettreaktoren liegt ein weiteres vorteilhaftes Merkmal darin, daß das Polysiliciumprodukt in Form eines Granulats erhalten wird, das näherungsweise kugelförmig ist. Dieses frei fließende, granulare Polysilicium ist sofort transportabel und verarbeitbar, während das stangenförmige Produkt aus dem Siemens-Reaktor für die weitere Prozessierung beispielsweise nach dem Czochralski-Verfahren erst gebrochen werden muß.

Trotz der genannten Vorteile stellen sich bei Verwendung eines Fließbettreaktors für die Herstellung von Siliciumgranulat häufig auch Nachteile ein. Das Granulat ist - im Gegensatz zu dem Polysilicium, das durch das Siemens-Verfahren erhalten wird - bei der Verwendung von Chlorsilanen wie beispielsweise Trichlorsilan als Siliciumquellengas und bei einer wirtschaftlichen Betriebsweise mit Chlor, kontaminiert. Die Kontamination ist im Kristallgitter eingeschlossen, so daß sie auch durch Tempern im Vakuum nicht entfernt werden kann.

Speziell bei der weiteren Prozessierung des Siliciumgranulats nach dem Czochralski-Verfahren wirkt sich eine hohe Chlorkontamination nachteilig aus, beispielsweise durch eine mindere Kristallqualität des aus der Schmelze gezogenen Einkristalls, durch die Bildung von Gasblasen in der Siliciumschmelze mit einhergehendem Verspritzen der Schmelze sowie der Bildung chlorhaltiger korrosiver Gase, die das Ziehwerkzeug zerstören. Diese Nachteile werden bei einer Chlorkontamination unter 50 Gew.-ppm nicht beobachtet.

Grundsätzlich besteht zwischen der Abscheidung eines gasförmigen Siliciumquellengases auf Siliciumstangen in einem Siemens-Reaktor bzw. auf Siliciumpartikeln in einem Fließbettreaktor kein Unterschied. Stimmen die Zusammensetzung und das Verhältnis des Reaktionsgases, die Temperatur der Siliciumoberflächen (Stangen bzw. Partikel), und der Reaktordruck in beiden Prozessen überein, wird dennoch in dem Siliciumgranulat aus dem Fließbettreaktor eine deutlich erhöhte Chlorkontamination, verglichen mit dem stangenförmigen Polysilicium aus dem Siemens-Reaktor gefunden.

Aus der US 5,077,028 ist bekannt, daß die Chlorkontamination mit der durchschnittlichen Abscheiderate von elementarem Silicium auf den Siliciumpartikeln korreliert; mit steigender Abscheiderate sinkt die Chlorkontamination. Gemäß der Druckschrift ist eine Abscheiderate von über 0,4 µm/min bei einer Temperatur von über 1000 °C Voraussetzung für ein granulares Polysiliciumprodukt mit einer Chlorkontamination unter 20 Gew.-ppm.

Einen Fließbettreaktor bei einer Temperatur von 1000 °C zu betreiben, führt aber in starkem Maße zu einer unerwünschten Abscheidung von elementarem Silicium an den Innenseiten der Reaktorwände und somit zum Abbruch des CVD-Prozesses. Eine derart hohe Reaktortemperatur ist technisch kaum zu erzielen und gewährleistet weder eine sichere noch wirtschaftliche Betriebsweise.

Aufgabe der Erfindung war es daher, ein Verfahren zur Herstellung von Siliciumgranulat anzugeben, welches die genannten Nachteile ausschließt, und es insbesondere gestattet, Siliciumgranulat mit einer Chlorkontamination unter 50 Gew.-ppm herzustellen. Aufgabe war es weiterhin, zur Durchführung des Verfahrens, geeignete Verhältnisse in einer geeigneten Vorrichtung zur Verfügung zu stellen, die sich insbesondere für einen kontinuierlichen CVD-Prozeß in Fließbettreaktoren eignen.

Gelöst wird die Aufgabe durch ein Verfahren der eingangs genannten Art, das dadurch gekennzeichnet ist, daß die durchschnittliche Temperatur des Reaktionsgases in der Reaktionszone, während es die fluidisierten Siliciumpartikel durchströmt unter 900 °C liegt. Besonders bevorzugt ist, daß zusätzlich die durchschnittliche Temperatur der fluidisierten Siliciumpartikel in der Reaktionszone, während sie von dem Reaktionsgas durchströmt werden, über 900 °C liegt.

Überraschend wurde nämlich gefunden, daß die Chlorkontamination des granularen Polysiliciumprodukts unter 50 Gew.-ppm liegt, wenn die durchschnittliche Temperatur des Reaktionsgases, das vorzugsweise aus einer Gruppe von Gasen ausgewählt wird, die Tetrachlorsilan, Trichlorsilan, Dichlorsilan und Gemische dieser Gase umfaßt, in der Reaktionszone während es die fluidisierten Siliciumpartikel durchströmt unter 900 °C, bevorzugt unter 800 °C liegt, und die durchschnittliche Temperatur der fluidisierten Siliciumpartikel in der Reaktionszone wahrend sie von dem Reaktionsgas durchströmt werden über 900 °C, bevorzugt über
1000 °C liegt.

Auch wurde gefunden, daß sich die Abscheiderate von elementarem Silicium auf den Siliciumpartikeln durch das gegenüber dem Stand der Technik veränderte Temperaturprofil nicht merklich verringert, wenn die Oberflächentemperatur der Siliciumpartikel über 900 bevorzugt über 1000 °C liegt. Zur Steigerung der Abscheiderate kann gemäß dem beanspruchten Verfahren der Druck im Fließbettreaktor erhöht werden bevorzugt auf 2, besonders bevorzugt auf 5 bar. Das veränderte Temperaturprofil erweist sich nicht nur vorteilhaft hinsichtlich einer reduzierten Chlorkontamination, auch wird eine Abscheidung von elementarem Silicium an den Reaktorwänden nicht beobachtet. Die verbesserte thermische Konfiguration führt darüber hinaus zu einer Energieeinsparung.

Das bevorzugte erfindungsgemäße Verfahren ermöglicht damit die Herstellung von hochreinem granularen Polysilicium in einem Fließbettreaktor, in welchem die Temperatur des Reaktionsgases unter 900 °C bevorzugt unter 800 °C und die Temperatur der Siliciumpartikel über 900 °C, bevorzugt über 1000 °C liegt. In einem Fließbettreaktor gemäß dem Stand der Technik ist das auf etwa 300 °C vorgeheizte Reaktionsgas - durch Gasverteilungseinrichtungen - gleichmäßig über die gesamte Reaktionszone verteilt und bildet daher eine homogene Einheit mit den fluidisierten Siliciumpartikeln, die zuvor in der Heizzone auf über 1000 °C erhitzt wurden. Ein thermisches Equilibrium zwischen fluidisiertem Feststoff und Reaktionsgas stellt sich unter diesen Bedingungen schnell ein. Gewöhnlich ist dies bei Fließbettreaktoren vorteilhaft.

Bei dem erfindungsgemäßen Verfahren und der Vorrichtung zur Durchführung des Verfahrens durchströmt das Reaktionsgas die Reaktionszone mit den fluidisierten Siliciumpartikeln bevor sich ein thermisches Equilibrium einstellen kann.

Die durchschnittliche Temperatur des Reaktionsgases, das die Reaktionszone durchströmt, kann auf verschiedenen Wegen geregelt werden:
- beispielsweise wird durch die Reduzierung der Fließbetthöhe ein übermäßiger Gas-Feststoff -Kontakt vermieden und die Verweilzeit des Reaktionsgases in der Reaktionszone verkürzt, ohne daß sich dabei die Abscheiderate merklich verringert.
- eine gleichmäßige Gasverteilung und damit ein thermisches Equilibrium in der Reaktionszone wird vermieden, indem ein Siliciumquellengas oder ein Gemisch aus Trägergas und Siliciumquellengas (Reaktionsgas) durch eine oder mehrere röhrenförmige Düsen direkt in die Reaktionszone eingebracht wird. Mit diesem Verfahren lassen sich am oberen Ende der Reaktionszone, durch thermische Expansion große Gasblasen generieren, die zu heterogenen Wirbelschichten innerhalb der Reaktionszone führen.
- daneben kann über den Grad der Fluidisierung - definiert als das Verhältnis der durchschnittlichen Gasgeschwindigkeit u zu der minimalen Gasgeschwindigkeit, die zur Fluidisierung führt u_{mf} - Einfluß auf die durchschnittliche Temperatur des Reaktionsgases genommen werden. Die durchschnittliche Temperatur des Reaktionsgases in der Reaktionszone nimmt mit dem Wert u/u_{mf} ab.

Das erfindungsgemäße Verfahren zur Herstellung von hochreinem Siliciumgranulat läßt sich auf jeden herkömmlichen Fließbettreaktor anwenden; die nötigen Betriebsbedingungen anhand der durchschnittlichen Reaktionsgastemperatur, die mit geeigneten Meßeinrichtungen erfaßt wird, überwachen.

Beispielsweise wird die durchschnittliche Temperatur des Reaktionsgases in der Reaktionszone von einem Thermometer erfaßt, dessen thermoelektrische Meßeinrichtung so abgeschirmt ist, daß nur Reaktionsgas nicht aber Siliciumpartikel das Schild passieren können. Bevorzugt wird aber die durchschnittliche Reaktionsgastemperatur über der Reaktionszone des Fließbetts am Abgasauslaß gemessen. Die Temperatur der Siliciumpartikel wird mit einem herkömmlichen Thermoelement oder einem Infrarot-Pyrometer gemessen.

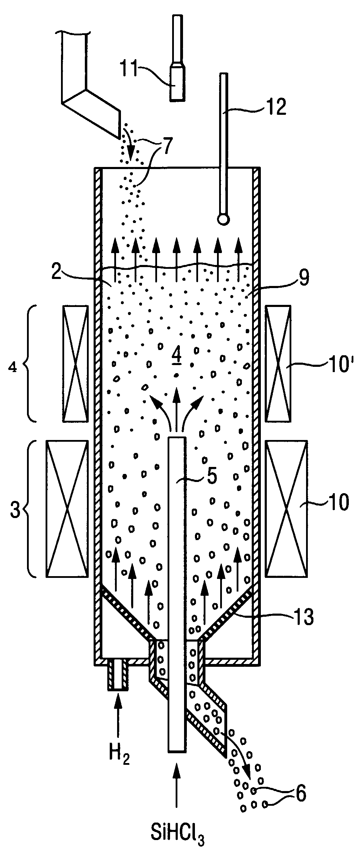

Das erfindungsgemäße Verfahren und eine Vorrichtung zur Durchführung des Verfahrens wird im folgenden anhand eines Ausführungsbeispiels näher erläutert. Ein zur Durchführung des Verfahrens geeigneter Fließbettreaktor ist schematisch in der Figur dargestellt. Der Übersicht halber sind Vorrichtungen, wie sie aus dem Stand der Technik bekannt sind, nicht gezeichnet.

Aus der Tabelle wird die Leistungsfähigkeit des beanspruchten Verfahrens deutlich.

Das Reaktorrohr 1, aus Metall beispielsweise aus rostfreiem Stahl ist auf der Innenseite mit hochreinem Quarz ausgekleidet und an der Außenseite mit Isoliermaterial 10 und 10' mit geringer thermischer Leitfähigkeit beispielsweise Silicamaterial ummantelt (nicht dargestellt). Im unteren Teil des Fließbetts 2 befindet sich die Heizzone 3, in der die Siliciumpartikel durch ein siliciumfreies Trägergas, das vorzugsweise aus einer Gruppe von Gasen ausgewählt wird, die Wasserstoff, Stickstoff, Argon, Helium und Gemische dieser Gruppe umfaßt, fluidisiert und durch Mikrowellenenergie aus einer Heizeinrichtung, beispielsweise einen Mikrowellengenerator (nicht dargestellt) erhitzt werden. Das vorgeheizte Trägergas, strömt durch eine Gasverteilungseinrichtung 13 in die Heizzone des Reaktors. Die darüber liegende Reaktionszone 4 befindet sich über der röhrenförmigen Düse 5. Während des Betriebs des Reaktors kommt es in der Reaktionszone 4, in die durch eine röhrenförmige Düse 5 ein vorgeheiztes Siliciumquellengas beispielsweise Trichlorsilan oder ein Gasgemisch aus Siliciumquellengas und siliciumfreien Trägergas, strömt, zum kontinuierlichen CVD-Prozeß auf den fluidisierten Siliciumpartikeln 9. Die durchschnittliche Temperatur der fluidisierten Siliciumpartikel 9 in der Reaktionszone wird hauptsächlich durch Übertragung der in die Heizzone eingetragenen Mikrowellenenergie aufrechterhalten. Diese Reaktorgestaltung schafft eine verbesserte thermische Konfiguration mit einhergehender Energieeinsparung.

Die durchschnittliche Temperatur der Siliciumpartikel 9 in der Reaktionszone 4 wurde mit einem Infrarot-Pyrometer 11, die durchschnittliche Temperatur des Reaktionsgases mit einem Thermometer 12 gemessen. Die thermoelektrische Meßeinrichtung des Thermometers 12 war abgeschirmt und direkt über der Reaktionszone 4 angebracht. Im gleichen Verhältnis wie Siliciumgranulat 6 als Produkt aus dem Reaktor entfernt wurde, wurden Siliciumpartikel 7 am oberen Ende des Reaktorrohres zugeführt, um so das Füllgewicht (Fließbetthöhe) und die durchschnittliche Partikelgröße in dem vorbestimmten Bereich zu halten. Das Füllgewicht lag während des Betriebes zwischen 25 und 28 kg, die Siliciumpartikelgröße zwischen 0,8 und 1,0 mm.

Die überraschende Effizienz des erfindungsgemäßen Verfahrens wird durch die Vergleichsbeispiele V1 und V2 in der Tabelle deutlich. An Stelle der röhrenförmigen Düse 5 wurde hier das Siliciumquellengas und das siliciumfreie Trägergas durch eine Gasverteilungseinrichtung gemäß dem Stand der Technik in die Reaktionszone 4 eingetragen, was zu einer homogenen Vermischung von Reaktionsgas und fluidisierten Siliciumpartikeln führte. In der Reaktionszone herrschte ein thermisches Equilibrium d.h. Reaktionsgas und Siliciumpartikel hatten die gleiche Temperatur.

Die Meßdaten in der Tabelle (vgl. Beispiel B1 bis B6) belegen, daß die Chlorkontamination im Reaktionsprodukt (Siliciumgranulat) unter 50 Gew.-ppm liegt, wenn gemäß dem beanspruchten Verfahren, die durchschnittliche Temperatur des Reaktionsgases unter 900 bevorzugt unter 800 °C liegt. Die Meßdaten belegen auch die vorteilhaften Effekte eines erhöhten Reaktordrucks, bevorzugt sind 2 besonders bevorzugt 5 bar, sowohl auf die Chlorkontamination als auch auf sämtliche prozeßoptimierende Betriebsparameter wie Gas- und Partikeltemperaturen und Abscheideraten. Damit wird eine wirtschaftliche Betriebsweise und eine Energieeinsparung durch einen geringen konvektiven Wärmeverlust (erfindungsgemäß wird auf das aufströmende Reaktionsgas in der Reaktionszone möglichst wenig Energie übertragen) ermöglicht.

Das erfindungsgemäße Verfahren und die Vorrichtung zur Durchführung des Verfahrens zeigen Merkmale, die sich von vorbekannten Verfahren und Vorrichtungen zur Herstellung von polykristallinem Siliciumgranulat deutlich unterscheiden.

Das Verfahren ermöglicht die Herstellung von hochreinem Siliciumgranulat bei einer durchschnittlichen Temperatur des Reaktionsgases in der Reaktionszone, die unter der der Siliciumpartikel liegt, bevorzugt unter 900 °C, besonders bevorzugt unter 800 °C. Das Problem der Abscheidung von elementarem Silicium an den Reaktorwänden durch eine intensive Beheizung tritt bei dem beanspruchten Verfahren nicht auf.

Im Gegensatz zu Verfahren gemäß dem Stand der Technik wird bei dem beanspruchten Verfahren eine gleichmäßige Vermischung d.h. ein intensiver Kontakt zwischen Reaktionsgas und Siliciumpartikel vermieden. Obwohl die durchschnittliche Temperatur des Reaktionsgases in der Reaktionszone deutlich unter der gemäß dem Stand der Technik liegt, verringert sich die Abscheiderate nicht, solange die durchschnittliche Oberflächentemperatur der Siliciumpartikel hoch genug ist, bevorzugt über 900 °C, besonders bevorzugt über 1000 °C.

Die Beheizung der fluidisierten Siliciumpartikel erfolgt auf einfachem Weg beispielsweise durch Mikrowellenenergie in der Heizzone, die sich unterhalb der Reaktionszone befindet, und mit dieser in direktem Kontakt steht. Durch die einfache Vermischung der fluidisierten Siliciumpartikel der Reaktionszone mit den heißeren Siliciumpartikeln aus der Heizzone, gewährt das beanspruchte Verfahren eine effiziente Ausnutzung der Heizenergie. Die durchschnittliche Temperatur des Reaktionsgases wird mit vorbekannten Verfahren, wie beispielsweise dem Grad der Fluidisierung oder der Fließbetthöhe geregelt. Gemäß dem beanspruchten Verfahren reduziert sich die, durch das Reaktionsgas von den Siliciumpartikeln abgezogene Wärme (auf Grund der niedrigeren Temperatur des Reaktionsgases) was zu einer weiteren Energieeinsparung führt.

Die Erfindung stellt damit ein Verfahren zur Herstellung von hochreinem Polysilicium in einem Fließbettreaktor zur Verfügung, das sich durch eine verbesserte thermische Konfiguration und eine effiziente Energieausnützung bei geringerer Chlorkontamination des Reaktionsprodukts auszeichnet.

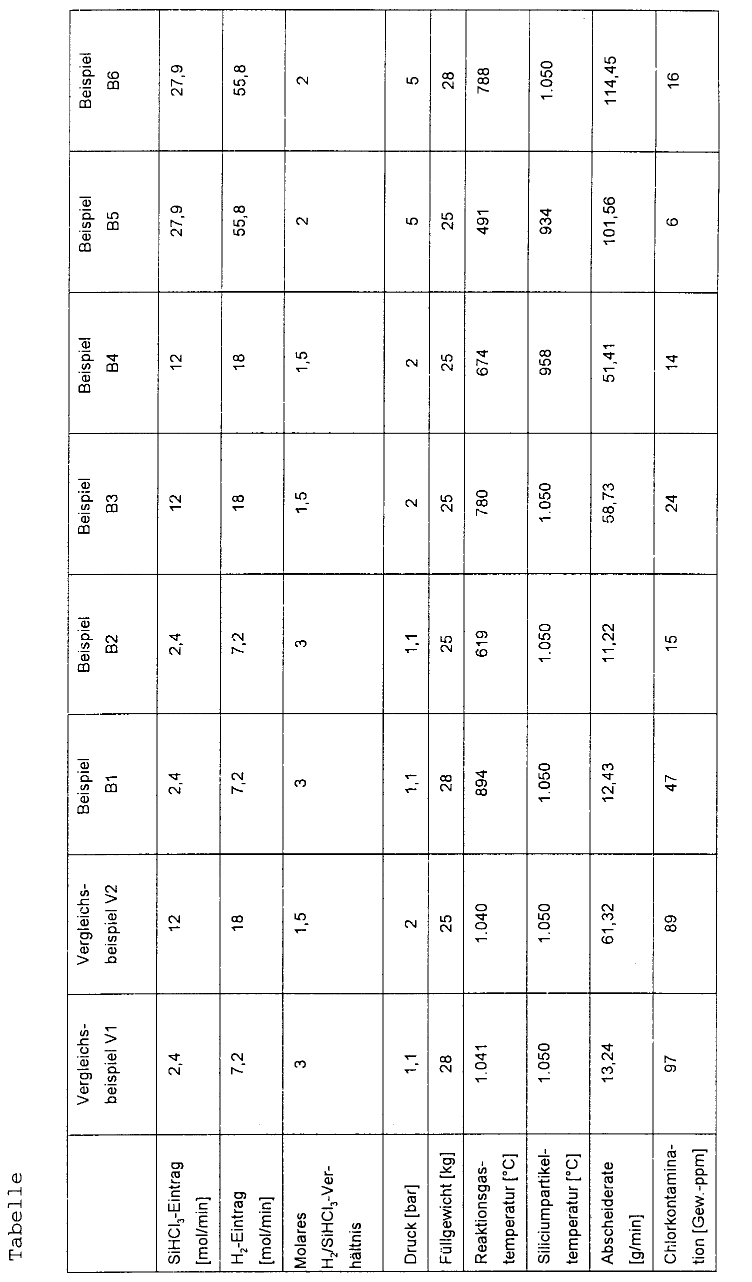

## Patentansprüche

1. Verfahren zur Herstellung von Siliciumgranulat mit einer Chlorkontamination unter 50 Gewichts-ppm durch Abscheidung von elementarem Silicium auf Siliciumpartikeln in einem Fließbettreakor mit einer Heiz- und einer Reaktionszone, wobei die Siliciumpartikel in der Heizzone mittels eines inerten, siliciumfreien Trägergases zu einem Fließbett fluidisiert und mittels Mikrowellenenergie erhitzt, und in der Reaktionszone einem Reaktionsgas, bestehend aus einem Siliciumquellengas und dem Trägergas, ausgesetzt werden, dadurch gekennzeichnet, daß die durchschnittliche Temperatur des Reaktionsgases in der Reaktionszone, während es die fluidisierten Siliciumpartikel durchströmt, unter 900 °C liegt.

2. Verfahren nach Anspruch 1, dadurch gekennzeichnet, daß die durchschnittliche Temperatur der fluidisierten Siliciumpartikel in der Reaktionszone, während sie von dem Reaktionsgas durchströmt werden, über 900 °C liegt.

3. Verfahren nach Anspruch 1, dadurch gekennzeichnet, daß das Siliciumquellengas oder das Reaktionsgas durch eine oder mehrere röhrenförmige Düsen direkt in die Reaktionszone des Fließbettreaktors eingetragen wird.

4. Verfahren nach Anspruch 1, dadurch gekennzeichnet, daß über die Fließbetthöhe die Temperatur des Reaktionsgases geregelt wird.

5. Verfahren nach Anspruch 1, dadurch gekennzeichnet, daß über den Grad der Fluidisierung, definiert als das Verhältnis der durchschnittlichen Gasgeschwindigkeit u zu der minimalen Gasgeschwindigkeit die zur Fluidisierung führt u_{mf}, die Temperatur des Reaktionsgases in der Reaktionszone geregelt wird.

6. Verfahren nach Anspruch 1 oder 2, dadurch gekennzeichnet, daß das Siliciumquellengas vorzugsweise aus einer Gruppe von Gasen ausgewählt wird, die Tetrachlorsilan, Trichlorsilan, Dichlorsilan und Gemische dieser Gase umfaßt.

7. Verfahren nach einem der Ansprüche 1 bis 3, dadurch gekennzeichnet, daß das siliciumfreie Trägergas vorzugsweise aus einer Gruppe von Gasen ausgewählt wird, die Wasserstoff, Stickstoff, Argon, Helium und Gemische dieser Gase umfaßt.
